# EUROPEAN PATENT SPECIFICATION

(11) **EP 2 518 843 B1**
(45) Date of publication and mention of the grant of the patent: **06.07.2016**
(21) Application number: 09809067.3
(22) Date of filing: 21.12.2009
(51) Int. Cl.: H02B 13/00, H01H 85/042

(54) **DEVICE FOR HIGH-VOLTAGE ELECTRIC CONNECTION BETWEEN ELECTRIC DEVICES**
HOCHSPANNUNGSVERBINDUNG ZWISCHEN ELEKTRISCHEN GERÄTEN
LIAISON ÉLECTRIQUE HAUTE TENSION ENTRE DES ÉQUIPEMENTS ELECTRIQUES

(43) Date of publication of application: 31.10.2012
(73) Proprietor: Ormazabal Y Cia., S.L.U., 48140 Igorre (Vizcaya) (ES)
(72) Inventor: Sabas Fernandez, José, Luis, E-48140 Igorre (Vizcaya) (ES); Cormenzana Lopez, Javier, E-48140 Igorre (Vizcaya) (ES); Rubio Chuan, Miguel, E-48340 Amorebieta (Vizcaya) (ES)
(74) Representative: Carpintero Lopez, Francisco
(86) International application number: PCT/ES2009/070610
(87) International publication number: WO 2011/076955

(56) References cited:
- EP-A2- 0 110 008
- US-A- 3 513 425
- US-A- 3 559 141
- US-A- 4 060 785
- US-A- 5 903 209
- US-A1- 2008 129 441

## Description

### Object of the Invention

The field of application of the present invention is in electrical power distribution networks and more specifically in devices for a high-voltage electric connection between first electrical equipment, for example high-voltage switchgear, and second electrical equipment, for example a transformer, without needing to use external cable jumpers, said devices comprising an insulating body housing a protective element for protection against high fault currents.

### Background of the Invention

Electric transformer substations are basically formed by three essential elements or parts or functional units, though functionally independent from one another, one of which parts consists of high-voltage switchgear, whereas a second part consists of a transformer, the third part being formed by a low-voltage switchboard, such that these parts are independent and are electrically connected.

According to a common configuration, high-voltage switchgear comprise a line connection and an outgoing feeder, forming a loop, as well as a third protection position supplying the transformer. The transformer substation is supplied through the high-voltage line connection of the first feeder switchgear, which is connected, through the outgoing feeder of the loop, with the second feeder switchgear, which allows isolating a building or an installation without the power supply to the remaining installations being cut off as a result. The electric power is led from this second feeder switchgear to the next transformer substation, which will logically supply another installation.

The transformer is supplied through the third position or switchgear, carrying out the electric connection between both elements by means of cables. The third position, referred to as protection switchgear, incorporates protection of the transformer, usually by means of fuses or even by means of a circuit breaker. These fuses are usually installed inside the high-voltage switch gear, but there are also solutions in which they are integrated in the tank itself of the transformer, immersed in the oil itself of the transformer, or inside a bay independent of the high-voltage switch gear and the transformer, as defined for example in patent FR2782418B1.

The function of said fuses is to prevent electric failures that may occur downstream, i.e., in the low-voltage distribution network, in the low-voltage switchboard, in the high-voltage interconnection between the switchgear and the transformer, or in the transformer, from affecting the substation, thus limiting the extent of the incident.

The assembly determined by the high-voltage switchgear, the transformer and the low-voltage switchboard are usually arranged in a closed room which, in most cases, corresponds to the basement or storage area of the building which is to be supplied, or else in a shed outside and close to the building, which must offer sufficient safety and ergonomic conditions for operators, made in suitable accesses or spaces appropriate for the operation and installation of the equipment.

The main requirement with respect to space is the need to have a clear front of approximately one meter wide both in the high-voltage switch gear and in the low-voltage switch gear, as well as an access corridor and safety distances to elements which are energized and can be accessible by operators or third persons. This means that in practice, a large amount of space is necessary for the placement of all the components of the substation, which involves an enormous cost for the power supply company. This is why there is great interest today in compact equipment which occupies increasingly smaller spaces.

On the other hand, the electric connection between the high-voltage switchgear and the transformer is usually carried out by means of external wiring which is exposed, being able to lead to unwanted breakdowns and accidents. Furthermore, this wiring must be carried out "in situ", which requires specialized operators for correctly carrying out the various connections.

Specifically, the connections between the high-voltage switchgear and the transformer are carried out by means of cables with terminals at their ends, the terminals usually being constructed at the building site, therefore they are not subjected to the relevant tests to check the quality of the coupling.

Examples of solutions of this type can be observed in patents and utility models ES2228264B2, FR2881001 B1, FR2826194B1, FR2905532A1, DE9202127U1, ES2287081 T3, US3513425, etc.

As a measure against the problems set forth above there are solutions in which the electric cable connections have been replaced by direct connections, i.e., without external cable jumpers or terminals, these connections being carried out in the manufacturing process, thereby preventing them from being exposed to the exterior, the problems due to the existence of the wiring being solved. Furthermore, these connections are not fixed but rather plug-in type, which allows the connection and disconnection of the various units when needed, each independent unit maintaining its functional capacity and its technological evolution. Furthermore, by means of the direct connection the problem involving the space necessary for the installations is reduced, since the equipment assembly that is obtained is more compact.

In this sense, some patent documents can be mentioned which describe solutions with direct connections, such as for example, EP1326313A1, WO2004012312A1, WO03032458A1, WO02075757A1 and ES2155037B1.

In these patent documents, the direct electric connection between the high-voltage switchgear and the transformer is carried out by means of a coupling system, such as the one described in patent EP1339145A1 for example, which describes an independent connecting element which is housed by plugging it in, as an intermediate part, in respective coupling means (sockets) provided for that purpose in each electrical equipment to be coupled.

Devices are known which allow a direct electric connection between equipment, and they furthermore relate to devices incorporating a protective element therein, such as a fuse for example. In this sense, problems relating to wiring and to space are prevented, providing as regards space greater compactability due to the fact that in addition to being a direct connection, the protection function by means of a fuse is incorporated in the same high-voltage direct electric connection.

For example, patent documents US4060785 ES2210984T3, KR100793851B1, US3946351 and WO2005038846A1 define this type of device, in which the protective element (fuse) is encapsulated inside an insulating body, this insulating body being the independent connector which is housed by plugging it in, as an intermediate part, in respective coupling means (sockets) provided for that purpose in each electrical equipment to be coupled.

The solutions defined in patent documents WO2005038846A1, US3946351 and KR100793851B1 have the drawback that the insulating body encapsulating the fuse is not valid for any fuse length; it only allows housing fuses of a certain length. Therefore, when a fuse is replaced, it is also necessary to replace the insulating body for the new fuse, which involves an increase in the installation maintenance costs.

There are known solutions to this problem mentioned in the preceding paragraph such as that of patent ES2210984T3, which describes a fuse encapsulated in an insulating body consisting of three parts, a central fuse casing and two end casings. In this sense, when replacing the fuse, in the event that the new fuse is of a different length, specifically a shorter fuse, in order to adapt said new fuse to the length of the central casing an elongation part for the fuse is included inside said casing, the three insulating casings being usable.

In the first place, this adaptation system only serves for new fuses of shorter length, whereas for new longer fusers, it is necessary to replace the central casing. In the second place, this adaptation system involves the use of new elements and couplings which can result in problems, such as greater voltage drops in the interconnection, higher probability of hot spots due to poor tightening of the connection, heating problems due to possible air pockets or gaps between the connection and the central casing, etc. It also involves the development of fuses specifically for this solution.

A known problem in this type of device in which a fuse is encapsulated relates to the corona effect. The corona effect consists of the high voltages of the system present in the fuse being separated from the ground reference by a relatively thin insulating material, and under these conditions the fuse tends to be subjected to electrical.stress that may cause the dielectric breakdown, generating corona or electric arc type discharges between the conductive elements of the fuse and the grounded enclosure. This causes the formation of nitrous oxides which attack the metal components of the fuse. After the fuse has been subjected to such action for a long period of time, it can be severely corrosive and the suitable operation of the fuse may be seriously jeopardized. This corona effect can also occur due to a damaged or contaminated insulation (of ceramic or another material), it can occur at the live ends of insulating assemblies and insulating sleeves, in summary, at any point of the electric device in which the electric field exceeds a certain value, the deterioration of the materials and the production of contaminating compounds causing said corona effect.

To prevent or attenuate the corona effect, the direct connection devices comprising an encapsulated fuse, such as the devices defined in patent documents ES2210984T3, US3946351 and WO2005038846A1, comprise a conductive means around the fuse, which is at the same potential as the fuse, such that the electric field is uniformly distributed between said conductive means and the outer part of the insulating body of the device which is coated with another grounded conductive means.

In this sense, in the case of WO2005038846A1 the conductive means surrounding the fuse is a metal, for example aluminum, shield, one of its ends being coupled under pressure to a conductive end of the fuse and the other end unconnected, the insulating material then being injected on the assembly formed by both elements. In the process of injecting the insulating material the metal shield and the fuse are subjected to high pressures and temperatures, for example, the temperature can reach up to 180ºC, which involves the risk that the properties of the fuse may be jeopardized, and therefore the suitable operation of the fuse may be seriously jeopardized.

With regard to patent US3946351, given that the insulating casing encapsulating the fuse consists of two parts, each of these parts comprises its own shield embedded therein, each of these shields being coupled to the corresponding conductive end of the fuse. A preferably silicon gasket is in turn arranged between both parts of the insulating casing to prevent the entrance of moisture and to also prevent the creation of any conductive path between the conductive terminals of each of the parts forming the insulating casing. The solution of this US patent involves the aforementioned drawback relating to that of replacing the fuse with a fuse of longer length.

Patent ES2210984T3 describes a solution of a device for direct connection encapsulating a fuse. The fuse is encapsulated in the central fuse casing, such that the fuse itself comprises on the outer surface, and specifically on its central body, an electrically conductive material, such as a suitable paint for example that can be brushed or sprayed directly on said outer surface of the fuse, to prevent corona effect problems. Alternatively, any suitable molded conductive material can be placed around the outer surface of the fuse. This solution to the corona effect involves the drawback that since the conductive material is arranged directly on the surface of the fuse, in the event of there being, for example, any air bubble or gap between said energized surface and the central fuse casing, the electric,field would be concentrated in said bubble or gap, and therefore partial discharges could be caused which would degrade the central fuse casing.

### Description of the Invention

The object of the invention is a high-voltage electric connection device between first high-voltage electrical equipment and second high-voltage electrical equipment. The connection is carried out directly without needing to use external cable jumpers.

The connection device comprises at least one insulating body comprising:
- a first connection element configured for the direct connection to first coupling means of the first electrical equipment,
- a second connection element configured for the direct connection to second coupling means of the second electrical equipment,
- at least one protective element for protection against fault currents (for example a fuse) housed inside the mentioned at least one insulating body and
- conductive terminals for the electric connection between conductive ends of the protective element and the coupling means.

According to the invention, the mentioned insulating body internally comprises at least one inner semi-conductive means connected to the electric potential of the protective element. This inner semi-conductive means assures the control of the electric field, being able to consist, for example, of a semi-conductive layer or paint.

The mentioned at least one inner semi-conductive means can be electrically connected with a first conductive end of the protective element and can be in electrical contact with at least one of the conductive terminals of the insulating body.

The inner semi-conductive means can partially extend along the protective element without contact with a second conductive end of the protective element.

The at least one insulating body can be externally coated, at least partially, with an outer grounded semi-conductive means, such as a semi-conductive layer or paint for example, such that the electric field is uniformly distributed between the inner semi-conductive means and the outer part of the insulating body which is coated with the outer grounded semi-conductive means, thus preventing the corona effect and the possible partial discharges that may occur for example due to an air bubble or gap between the protective element and the insulating body.

The first electrical equipment can be, for example, high-voltage switchgear and the second electrical equipment a transformer. In this case, the high-voltage electric connection is performed directly on the upper cover of the transformer, this transformer being able to be a conventional transformer, i.e., it comprises cooling fins in its four side walls and an upper cover configured to allow a high-voltage electric connection between the transformer and the high-voltage switchgear and a low-voltage electric connection with the low-voltage switchboard.

The high-voltage switchgear and the transformer in its upper cover comprise the mentioned first and second coupling means, the insulating body being the independent connector comprising a first and second connection element and it can be installed by plugging or screwing it in, as an intermediate part, between said first and second coupling means provided for that purpose in the switchgear and transformer to be coupled. According to the invention, the coupling means of the high-voltage switchgear comprise a switchgear bushing for each phase and the upper cover of the transformer comprises a transformer bushing for each phase. These bushings are preferably female type bushings, male type bushings, or combinations thereof. On the other hand, the first and second connection element of the mentioned at least one insulating body can comprise a female type bushing, a male type bushing or combinations thereof, or a closure plug to assure the insulation.

In summary, the high-voltage electric connection is a direct connection without external cables, this connection being carried out in the manufacturing process, therefore preventing them from being exposed to the outside, the problems due to the existence of the wiring being solved. Furthermore, these connections can be a plug-in type, which allows the connection and disconnection of the various units when needed, each independent unit maintaining its functional capacity and allowing its technological evolution. Due to its location, the mentioned high-voltage electric connection is completely inaccessible, thus preventing any incident due to contact.

The transformer substation achieved based on the combination of the high-voltage switchgear, the transformer and the low-voltage switchboard, will occupy a minimum space, the space needs for the installation thus being reduced, only the line connection wiring and outgoing feeder of the high-voltage loop and the low-voltage outgoing feeder towards the building or installation to be supplied being seen.

In one embodiment of the invention, the insulating body comprises at least one additional connection element which allows the installation of measurement, control and protection means through third coupling means which are electrically connected to a conductive terminal of the insulating body. The third coupling means allow installing measurement, control and protection means comprising at least one voltage sensor, at least one voltage transformer, means for receiving/transmitting signals via PLC or means for detecting partial discharges.

The possibility that the insulating body can comprise a central body, which incorporates the protective element therein, has been contemplated, at least one conductive end of said protective element being outside the mentioned central body. Likewise, the insulating body comprises two end elements configured to be coupled at ends of the central body, respectively enveloping the two conductive ends of the protective element and their respective conductive terminals.

Therefore, when replacing the protective element, if it is a new protective element of different length, only the central body needs to be replaced, the two end elements and the conductive terminals allowing the electric connection between the first and second coupling means and the protective element being usable, preventing the use of adaptation systems which involve the use of new elements and couplings which can result in problems, such as greater voltage drops in the interconnection, higher probability of hot spots due to poor tightening of the connection, heating problems due to possible air pockets or gaps between the connection and the central casing, etc. Therefore, the connection device object of the invention allows using protective elements manufactured with standard market elements, according to standard IEC 60282-1. Normalized protective elements are therefore used.

The conductive terminals can comprise at least two conductive parts allowing the electric connection between a conductive end of the protective element and coupling means of electrical equipment (the first or the second coupling means). The conductive parts (configured for example as two semicylinders) brace a conductive cap and at least one conductive end of the protective element. The conductive cap is in turn electrically connected with one of the coupling means (first or second coupling means) through at least one metal part, such as for example a stud, the coupling means being able to be screwed to said at least one metal part.

The electric connection formed by a conductive end of the protective element, the conductive cap and at least two conductive parts is tightened by means of the coupling to at least one metal part of at least one coupling means and at least one securing part, such as a nut for example. This electric connection carried out by means of a conductive terminal can be assured through at least one elastic element surrounding the mentioned at least two conductive parts.

The integration of the protective element as well as of the remaining elements forming the connection device in at least one insulating body is carried out in cold conditions, i.e., the insulating material is not injected on said elements, thus preventing high pressures and temperatures occurring during the injection process which involve the risk that the properties of the fuse may be jeopardized. The suitable operation of the fuse is thus assured.

It is also possible that the insulating body can have at least one heat radiating element which allows improving the nominal intensity of the protective element. The connection device can comprise in turn at least one thermographic seal which changes colors when the desired element reaches a fixed temperature.

### Description of the Drawings

To complement the description and for the purpose of aiding to better understand the features of the invention according to a preferred practical embodiment thereof, a set of drawings is attached as an integral part of said description in which the following has been depicted with an illustrative and non-limiting character:

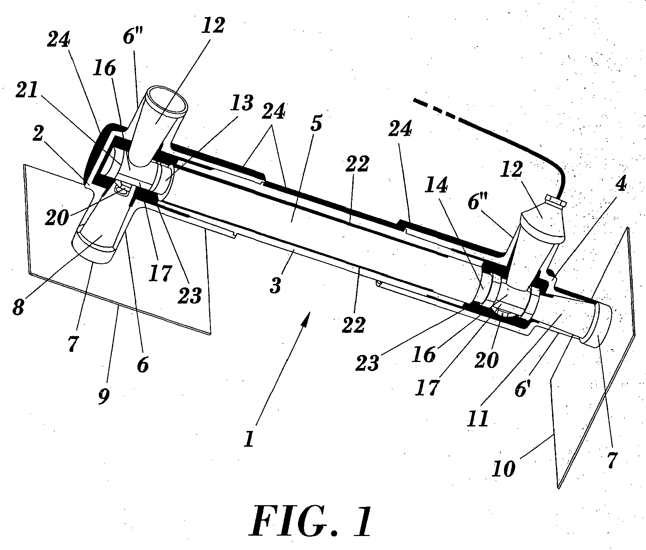

Figure 1 shows a section view of an insulating body (2, 3, 4) of the connection device (1) object of the invention, in which the protective element (5) encapsulated inside a central body (3) and two end elements (2, 4) for electrically connecting the protective element (5) and coupling means (8, 11, 12) are observed.

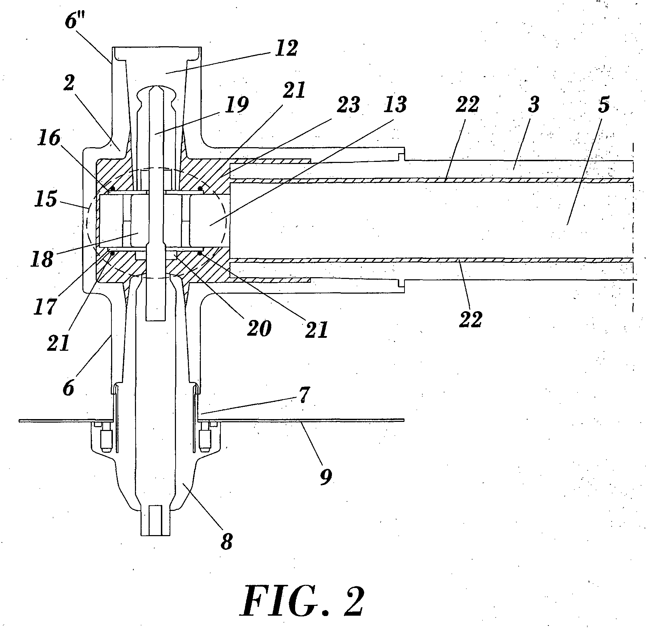

Figure 2 shows a detail of a section view of a part of the connection device (1), in which a conductive terminal (15) encapsulated inside the end element (2), allowing the electric connection between the conductive end (13) of the protective element (5) and coupling means (8), is observed.

### Preferred Embodiment of the Invention

According to an embodiment of the invention, the connection device (1) allows performing a high-voltage direct electric connection (7) between first electrical equipment (9), for example high-voltage switchgear, and second electrical equipment (10), for example a transformer, without heeding to use external cable jumpers.

As is shown in Figure 1, the connection device (1) comprises at least one insulating body (2, 3, 4) comprising a central body (3) housing a protective element (5), a first connection element (6) forming part of an end element (2) coupled to the central body (3) and a second connection element (6') forming part of an end element (4) coupled to the central body (3). By means of said connection elements (6, 6') a high-voltage direct electric connection (7), without cables, is allowed between coupling means (8) comprised in the first electrical equipment (9) and coupling means (11) of the second electrical equipment (10). Likewise, the insulating body (2, 3, 4) comprises at least one additional connection element (6") which allows the installation of measurement, control and protection means through third coupling means (12), said third coupling means (12) being able to consist of female type bushings, male type bushings or combinations thereof, or of a plug. In the case of not installing at least one measurement, control and protection means, said plug consists of a closure plug to assure the insulation.

According to the invention, the coupling means (8) comprised in the first electrical equipment (9) and the coupling means (11) of the second electrical equipment (10) comprise a bushing for each phase. These bushings can be female type bushings, male type bushings or combinations thereof.

The connection device (1) comprises encapsulated therein at least one protective element (5) against high fault currents, such as a fuse for example, as shown in Figures 1 and 2. Specifically, the fuse (5) is encapsulated inside the central body (3), there being at least one conductive end (13,14) of said fuse (5) outside the mentioned body (3).

Likewise, the connection device (1) comprises two end elements (2, 4) with one arranged at each end of the central body (3), such that the conductive ends (13, 14) of the fuse (5) are enveloped and protected by said end elements (2, 4), as well as their respective electric connection with at least one conductive terminal (15, 15') allowing the electric connection between the coupling means (8, 11, 12) and the fuse (5).

As is shown in Figure 2, the conductive terminal (15) comprises at least two conductive parts (16, 17), being able to be configured as at least two semi-cylinders, between which at least one conductive cap (18) and at least one conductive end (13, 14) of the fuse (5) are arranged. The conductive cap (18) is in turn electrically connected with coupling means (8, 11, 12) through at least one metal part (19), such as a stud for example, the coupling means (8, 11, 12) being able to be screwed to said at least one metal part (19). The electric connection formed by at least one conductive end (13, 14) of the fuse (5), at least one conductive cap (18) and at least two conductive parts (16, 17) is tightened by means of the coupling to at least one metal part (19) of the coupling means (8, 11, 12) and at least one securing part (20), such as a nut for example. This electric connection carried out means of a conductive terminal (15, 15') can be assured through at least one elastic element (21) surrounding the two conductive parts (16, 17).

As is observed in Figures 1 and 2, the insulating body (2, 3, 4) comprises at least partially therein an inner semi-conductive layer (22, 23) assuring the control of the electric field, said inner semi-conductive layer (22) being in contact with a single conductive end (13) or (14) of the fuse (5) and extended at least partially along said fuse (5) in the case of the insulating central body (3). In the case of the end elements (2, 4), the inner semi-conductive layer (23) is in contact or at the same potential as the conductive terminal (15, 15') allowing the electric connection between coupling means (8, 11, 12) and the fuse (5). Likewise, the outer surface of the insulating body (2, 3, 4) is coated with an outer grounded semi-conductive layer (24), such that the electric field is uniformly distributed between said inner semi-conductive layer (22, 23) and the outer part of at least one insulating body (2, 3, 4) of the device (1) which is coated with the outer grounded semi-conductive layer (24).

The reference numbers used in this text represent the following elements:
1.- Connection device
2.- End element
3.- Central body
4.- End element
5.- Protective element
6.- First connection element
6'.- Second connection element
6".- Additional connection element
7.- High-voltage electric connection
8.- Coupling means of the electrical equipment (9)
9.- First electrical equipment
10.- Second electrical equipment
11.- Coupling means of the electrical equipment (10)
12.- Third coupling means for the installation of measurement, control and protection means
13, 14.- Conductive ends of the protective element (5)
15, 15'.- Conductive terminal
16, 17.- Conductive parts
18.- Conductive cap
19.- Metal part (stud)
20.- Securing part (nut)
21.- Elastic element
22.- Inner semi-conductive layer in relation to the insulating central body (3)
23.- Inner semi-conductive layer in relation to the end elements (2, 4)
24.- Outer semi-conductive layer in relation to the insulating bodies (2, 3, 4)

In this text, the word "comprises" and variants thereof (such as "comprising", etc.), should not be interpreted in an excluding manner, i.e., they do not exclude the possibility that what has been described may include other elements, steps, etc.

On the other hand, the invention is not limited to the specific embodiments that have been described, but rather it also comprises, for example, the variants that can be carried out by the person skilled in the art (for example, as regards the choice of materials, dimensions, components, configuration, etc.), within what is inferred from the claims.

## Claims

1. High-voltage electric connection device between first high-voltage electrical equipment (9) and second high-voltage electrical equipment (10), said connection device (1) comprising three insulating bodies (2, 3, 4) comprising:
- a first connection element (6) forming part of an insulating end element (2) coupled to the central body (3) configured for the direct connection of the plugged-in type to first coupling means (8) of the first electrical equipment (9),
- a second connection element (6') forming part of an insulating end element (4) coupled to the central body (3) configured for the direct connection of the plugged-in type to second coupling means (11) of the second electrical equipment (10)
- at least one encapsulated fuse (5) for protection against fault currents housed inside the mentioned three insulating bodies (2, 3, 4) and
- conductive terminals (15,15') for the electric connection between conductive ends (13, 14) of the encapsulated fuse (5) and the coupling means (8, 11)
**characterized in that**:
- the mentioned insulating bodies (2, 3, 4) comprise at least one inner semi-conductive layer (22, 23) connected to the electric potential of the encapsulated fuse (5), such that the electric field is uniformly distributed, thus preventing the corona effect and the possible partial discharges;
- the connection device comprises at least one additional connection element (6") which allows the installation of measurement, control and protection means through third coupling means (12) which are electrically connected to said conductive terminal (15,15').

2. Connection device according to claim 1, **characterized in that** said at least one inner semi-conductive layer (22) is electrically connected with a first conductive end (13) of the encapsulated fuse (5).

3. Connection device according to claim 2, **characterized in that** the mentioned at least one inner semi-conductive layer (23) is in electrical contact with at least one conductive terminal (15,15').

4. Connection device according to claim 2, **characterized in that** the inner semi-conductive layer (22) partially extends along the encapsulated fuse (5) without contact with a second conductive end (14) of the encapsulated fuse (5).

5. Connection device according to claim 1, **characterized in that** the at least one insulating body (2, 3, 4) is at least partially externally coated with an outer grounded semi-conductive layer (24).

6. Connection device according to claim 1, **characterized in that** the third coupling means (12) allow installing measurement, control and protection means comprising at least one voltage sensor, at least one voltage transformer, means for receiving/transmitting signals via PLC or means for detecting partial discharges.

7. Connection device according to claim 1, **characterized in that** the conductive terminals (15,15') comprise at least two conductive parts (16, 17) allowing the electric connection between a conductive end (13, 14) and coupling means (8, 11, 12).

8. Connection device according to claim 7, **characterized in that** the conductive parts (16, 17) brace at least one conductive cap (18) and at least one conductive end (13, 14) of the encapsulated fuse (5).

9. Connection device according to claim 8, **characterized in that** the conductive cap (18) is in electric connection with coupling means (8, 11, 12) through at least one metal part (19) to which coupling means (8, 11, 12) are coupled.

10. Connection device according to claim 9, **characterized in that** the conductive terminals (15, 15') comprise at least one securing part (20) which is coupled to the metal part (19), such that the coupling of coupling means (8, 11, 12) on the metal part (19) and the coupling of at least one securing part (20) on said part (19) tighten the electric connection formed by a conductive end (13, 14), a conductive cap (18) and at least two conductive parts (16, 17).

11. Connection device according to claim 7, **characterized in that** the conductive terminals (15,15') comprise at least one elastic element (21) which prevents the separation of the conductive parts (16, 17).

12. Connection device according to claim 1, **characterized in that** the insulating body comprises a central body (3) incorporating the encapsulated fuse (5), there being at least one end (13, 14) of said element (5) outside the mentioned central body (3).

13. Connection device according to claim 12, **characterized in that** the insulating body comprises two end elements (2,4) configured to be coupled at ends of the central body (3), enveloping the conductive ends (13, 14) of the encapsulated fuse (5) and their respective conductive terminal (15, 15').

14. Connection device according to claim 1, **characterized in that** the coupling means (8, 11, 12) are bushings which are selected from female type bushings, male type bushings and combinations thereof, or from a closure plug to assure insulation.

15. Connection device according to claim 1, **characterized in that** the mentioned at least one insulating body (2, 3, 4) can have at least one heat radiating element which allows improving the nominal intensity of the encapsulated fuse (5).

16. Connection device according to claim 1, **characterized in** it that comprises at least one thermographic seal which changes colors when the desired element reaches a fixed temperature.

## Patentansprüche

1. Elektrische Hochspannungsverbindungsvorrichtung zwischen einer ersten elektrischen Hochspannungseinrichtung (9) und einer zweiten elektrischen Hochspannungseinrichtung (10), wobei die Verbindungsvorrichtung (1) drei Isolierkörper (2, 3, 4) umfasst, umfassend:
- ein erstes Verbindungselement (6), das einen Teil eines an den Zentralkörper (3) gekoppelten Isolierendelements (2) bildet, das für die direkte Steckverbindung zu ersten Kopplungsmitteln (8) der ersten elektrischen Einrichtung (9) ausgebildet ist,
- ein zweites Verbindungselement (6'), das einen Teil eines an den Zentralkörper (3) gekoppelten Isolierendelements (4) bildet, das für die direkte Steckverbindung zu zweiten Kopplungsmitteln (11) der zweiten elektrischen Einrichtung (10) ausgebildet ist,
- mindestens eine gekapselte Sicherung (5) zum Schutz gegen Fehlerstrom, welche in den genannten drei Isolierkörpern (2, 3, 4) eingesetzt ist.
- leitfähige Anschlüsse (15, 15') für die elektrische Verbindung zwischen leitfähigen Enden (13, 14) der gekapselten Sicherung (5) und den Kopplungsmitteln (8, 11),
**dadurch gekennzeichnet, dass**
- die genannten Isolierkörper (2, 3, 4) mindestens eine innere halbleitende Schicht (22, 23) umfassen, die mit dem elektrischen Potential der gekapselten Sicherung (5) verbunden ist, derart, dass das elektrische Feld einheitlich verteilt wird und dadurch ein Auftreten des Corona-Effekts und möglicher Teilentladungen verhindert,
- die Verbindungsvorrichtung mindestens ein zusätzliches Verbindungselement (6") umfasst, welches die Anbringung von Mess-, Steuer- und Schutzmitteln durch dritte Kopplungsmittel (12) ermöglicht, welche elektrisch mit dem leitfähigen Anschluss (15, 15') verbunden sind.

2. Verbindungsvorrichtung nach Anspruch 1, **dadurch gekennzeichnet, dass** die mindestens eine innere halbleitfähige Schicht (22) mit einem ersten leitfähigen Ende (13) der gekapselten Sicherung (5) elektrisch verbunden ist.

3. Verbindungsvorrichtung nach Anspruch 2, **dadurch gekennzeichnet, dass** die genannte mindestens eine innere halbleitende Schicht (23) in elektrischem Kontakt mit mindestens einem leitfähigen Anschluss (15, 15') steht.

4. Verbindungsvorrichtung nach Anspruch 2, **dadurch gekennzeichnet, dass** sich die innere halbleitende Schicht (22) teilweise entlang der gekapselten Sicherung (5) erstreckt, ohne Kontakt zu einem zweiten leitfähigen Ende (14) der gekapselten Sicherung (5).

5. Verbindungsvorrichtung nach Anspruch 1, **dadurch gekennzeichnet, dass** der mindestens eine Isolierkörper (2, 3, 4) außen mindestens teilweise von einer äußeren geerdeten halbleitende Schicht (24) bedeckt ist.

6. Verbindungsvorrichtung nach Anspruch 1, **dadurch gekennzeichnet, dass** die dritten Kopplungsmittel (12) die Anbringung von Mess-, Steuer- und Schutzmitteln ermöglichen, die mindestens einen Spannungssensor, mindestens einen Spannungswandler, Mittel zum Empfangen/Übertragen von Signalen über PLC oder Mittel zum Erkennen von Teilentladungen umfassen.

7. Verbindungsvorrichtung nach Anspruch 1, **dadurch gekennzeichnet, dass** die leitfähigen Anschlüsse (15, 15') mindestens zwei leitfähige Teile (16, 17) umfassen, die die elektrische Verbindung zwischen einem leitfähigen Ende (13, 14) und Kopplungsmitteln (8, 11, 12) ermöglichen.

8. Verbindungsvorrichtung nach Anspruch 7, **dadurch gekennzeichnet, dass** die leitfähigen Teile (16, 17) mindestens eine leitfähige Kappe (18) und mindestens ein leitfähiges Ende (13, 14) der gekapselten Sicherung (5) verstärken.

9. Verbindungsvorrichtung nach Anspruch 8, **dadurch gekennzeichnet, dass** die leitfähige Kappe (18) durch mindestens ein Metallteil (19), mit dem die Kopplungsmittel (8, 11, 12) gekoppelt sind, in elektrischer Verbindung mit Kopplungsmitteln (8, 11, 12) steht.

10. Verbindungsvorrichtung nach Anspruch 9, **dadurch gekennzeichnet, dass** die leitfähigen Anschlüsse (15, 15') mindestens ein Sicherungsteil (20) umfassen, welches an das Metallteil (19) gekoppelt ist, derart, dass die Kopplung von Kopplungsmitteln (8, 11, 12) an das Metallteil (19) und die Kopplung des mindestens einen Sicherungsteils (20) an dieses Teil (19) die aus einem leitfähigen Ende (13, 14), einer leitfähigen Kappe (18) und mindestens zwei leitfähigen Teilen (16, 17) gebildete elektrische Verbindung festigen.

11. Verbindungsvorrichtung nach Anspruch 7, **dadurch gekennzeichnet, dass** die leitfähigen Anschlüsse (15, 15') mindestens ein elastisches Element (21) umfassen, das die Abtrennung der leitfähigen Teile (16, 17) verhindert.

12. Verbindungsvorrichtung nach Anspruch 1, **dadurch gekennzeichnet, dass** der Isolierkörper einen Zentralkörper (3) umfasst, welcher die gekapselte Sicherung (5) aufnimmt, wobei sich mindestens ein Ende (13, 14) dieses Elements (5) außerhalb des genannten Zentralkörpers (3) befindet.

13. Verbindungsvorrichtung nach Anspruch 12, **dadurch gekennzeichnet, dass** der Isolierkörper zwei Endelemente (2, 4) umfasst, die dazu ausgelegt sind, an Enden des Zentralkörpers (3) gekoppelt zu werden und dabei die leitfähigen Enden (13, 14) der gekapselten Sicherung (5) und deren jeweiligen leitfähigen Anschluss (15, 15') zu umhüllen.

14. Verbindungsvorrichtung nach Anspruch 1, **dadurch gekennzeichnet, dass** die Kopplungsmittel (8, 11, 12) Durchführungen sind, ausgewählt aus weiblichen Durchführungen, männlichen Durchführungen und Kombinationen von diesen oder aus einem Verschlusszapfen, um Isolierung zu gewährleisten.

15. Verbindungsvorrichtung nach Anspruch 1, **dadurch gekennzeichnet, dass** der genannte mindestens eine Isolierkörper (2, 3, 4) mindestens ein Wärmestrahlelement aufweisen kann, welches es ermöglicht, die nominale Leistung der gekapselten Sicherung (5) zu verbessern.

16. Verbindungsvorrichtung nach Anspruch 1, **dadurch gekennzeichnet, dass** sie mindestens ein thermografisches Siegel umfasst, welches die Farbe ändert, wenn das gewünschte Element eine bestimmte Temperatur erreicht.

## Revendications

1. Dispositif de connexion électrique haute tension entre un premier équipement électrique haute tension (9) et un second équipement électrique haute tension (10), ledit dispositif de connexion (1) comprenant trois corps d'isolation (2, 3, 4) comprenant :
- un premier élément de connexion (6) faisant partie d'un élément d'extrémité d'isolation (2) couplé au corps central (3) configuré pour la connexion directe du type enfiché à des premiers moyens de couplage (8) du premier équipement électrique (9),
- un second élément de connexion (6') faisant partie d'un élément d'extrémité d'isolation (4) couplé au corps central (3) configuré pour la connexion directe du type enfiché à des seconds moyens de couplage (11) du second équipement électrique (10),
- au moins un fusible encapsulé (5) pour une protection contre des courants de défaut reçu à l'intérieur des trois corps d'isolation mentionnés (2, 3, 4) et
- des bornes conductrices (15, 15') pour la connexion électrique entre des extrémités conductrices (13, 14) du fusible encapsulé (5) et les moyens de couplage (8, 11),
**caractérisé par le fait que** :
- les corps d'isolation mentionnés (2, 3, 4) comprennent au moins une couche semi-conductrice interne (22, 23) connectée au potentiel électrique du fusible encapsulé (5), de telle sorte que le champ électrique est distribué uniformément, empêchant ainsi l'effet de couronne et les possibles décharges partielles ;
- le dispositif de connexion comprend au moins un élément de connexion supplémentaire (6") qui permet l'installation de moyens de mesure, commande et protection à travers des troisièmes moyens de couplage (12) qui sont connectés électriquement à ladite borne conductrice (15, 15').

2. Dispositif de connexion selon la revendication 1, **caractérisé par le fait que** ladite au moins une couche semi-conductrice interne (22) est connectée électriquement à une première extrémité conductrice (13) du fusible encapsulé (5).

3. Dispositif de connexion selon la revendication 2, **caractérisé par le fait que** l'au moins une couche semi-conductrice interne mentionnée (23) est en contact électrique avec au moins une borne conductrice (15, 15').

4. Dispositif de connexion selon la revendication 2, **caractérisé par le fait que** la couche semi-conductrice interne (22) s'étend partiellement le long du fusible encapsulé (5) sans contact avec une seconde extrémité conductrice (14) du fusible encapsulé (5).

5. Dispositif de connexion selon la revendication 1, **caractérisé par le fait que** l'au moins un corps d'isolation (2, 3, 4) est au moins partiellement revêtu de manière externe par une couche semi-conductrice mise à la masse externe (24).

6. Dispositif de connexion selon la revendication 1, **caractérisé par le fait que** les troisièmes moyens de couplage (12) permettent l'installation de moyens de mesure, commande et protection comprenant au moins un capteur de tension, au moins un transformateur de tension, des moyens pour recevoir/émettre des signaux par l'intermédiaire de CPL ou des moyens pour détecter des décharges partielles.

7. Dispositif de connexion selon la revendication 1, **caractérisé par le fait que** les bornes conductrices (15, 15') comprennent au moins deux parties conductrices (16, 17) permettant la connexion électrique entre une extrémité conductrice (13, 14) et les moyens de couplage (8, 11, 12).

8. Dispositif de connexion selon la revendication 7, **caractérisé par le fait que** les parties conductrices (16, 17) renforcent au moins un capuchon conducteur (18) et au moins une extrémité conductrice (13, 14) du fusible encapsulé (5).

9. Dispositif de connexion selon la revendication 8, **caractérisé par le fait que** le capuchon conducteur (18) est en connexion électrique avec les moyens de couplage (8, 11, 12) à travers au moins une partie métallique (19) à laquelle les moyens de couplage (8, 11, 12) sont couplés.

10. Dispositif de connexion selon la revendication 9, **caractérisé par le fait que** les bornes conductrices (15, 15') comprennent au moins une partie de fixation (20) qui est couplée à la partie métallique (19), de telle sorte que le couplage des moyens de couplage (8, 11, 12) sur la partie métallique (19) et le couplage d'au moins une partie de fixation (20) sur ladite partie (19) resserrent la connexion électrique formée par une extrémité conductrice (13, 14), un capuchon conducteur (18) et au moins deux parties conductrices (16, 17).

11. Dispositif de connexion selon la revendication 7, **caractérisé par le fait que** les bornes conductrices (15, 15') comprennent au moins un élément élastique (21) qui empêche la séparation des parties conductrices (16, 17).

12. Dispositif de connexion selon la revendication 1, **caractérisé par le fait que** le corps d'isolation comprend un corps central (3) incorporant le fusible encapsulé (5), au moins une extrémité (13, 14) dudit élément (5) se trouvant à l'extérieur du corps central mentionné (3).

13. Dispositif de connexion selon la revendication 12, **caractérisé par le fait que** le corps d'isolation comprend deux éléments d'extrémité (2, 4) configurés pour être couplés au niveau d'extrémités du corps central (3), enveloppant les extrémités conductrices (13, 14) du fusible encapsulé (5) et leurs bornes conductrices respectives (15, 15').

14. Dispositif de connexion selon la revendication 1, **caractérisé par le fait que** les moyens de couplage (8, 11, 12) sont des douilles qui sont sélectionnées parmi des douilles de type femelle, des douilles de type mâle et des combinaisons de celles-ci, ou parmi une fiche de fermeture pour assurer une isolation.

15. Dispositif de connexion selon la revendication 1, **caractérisé par le fait que** l'au moins un corps d'isolation mentionné (2, 3, 4) peut avoir au moins un élément de rayonnement de chaleur qui permet une amélioration de l'intensité nominale du fusible encapsulé (5).

16. Dispositif de connexion selon la revendication 1, **caractérisé par le fait qu'**il comprend au moins un joint thermographique qui change de couleurs lorsque l'élément souhaité atteint une température fixée.
